(19) Europäisches Patentamt
European Patent Office
Office européen des brevets

(11) Veröffentlichungsnummer: **0 502 858 B1**

(12) # EUROPÄISCHE PATENTSCHRIFT

(45) Veröffentlichungstag der Patentschrift: **04.01.95**

(51) Int. Cl.[6]: **C09D 5/25**, C09D 167/00, C09D 179/08

(21) Anmeldenummer: **90916208.3**

(22) Anmeldetag: **26.10.90**

(86) Internationale Anmeldenummer: **PCT/EP90/01911**

(87) Internationale Veröffentlichungsnummer: **WO 91/07469 (30.05.91 91/12)**

(54) **DRAHTLACKE SOWIE VERFAHREN ZUM KONTINUIERLICHEN BESCHICHTEN VON DRÄHTEN.**

(30) Priorität: **16.11.89 DE 3938058**

(43) Veröffentlichungstag der Anmeldung: **16.09.92 Patentblatt 92/38**

(45) Bekanntmachung des Hinweises auf die Patenterteilung: **04.01.95 Patentblatt 95/01**

(84) Benannte Vertragsstaaten: **AT BE CH DE DK ES FR GB IT LI NL SE**

(56) Entgegenhaltungen:
**DE-A- 2 545 912**
**DE-A- 2 840 352**
**US-A- 4 609 702**

**DIALOG INFORMATIONS SERVICES, File 350, World Patent Index 63-80, Dialog accession No. 76-13574X708; FURUKAWA ELECTRIC CO: "Thermosetting resin compsn.-contg. polyester resin and alkylene carbonate"; & JP-A-51 000 531**

(73) Patentinhaber: **Dr. Beck & Co. AG**
**Postfach 28 01 80,**
**Grossmannstrasse 105**
**D-20514 Hamburg (DE)**

(72) Erfinder: **LIENERT, Klaus-Wilhelm**
**Bernadottestrasse 54**
**D-2000 Hamburg 50 (DE)**
Erfinder: **LEHMANN, Helmut**
**Hasenstieg 5**
**D-2057 Reinbek (DE)**
Erfinder: **RUNGE, Joachim**
**Johann-Kröger-Weg 11**
**D-2057 Reinbek (DE)**
Erfinder: **REICH, Hans-Heiner**
**Kranichstrasse 11**
**D-6700 Ludwigshafen (DE)**
Erfinder: **STOJANOV, Sylvia**
**Zeughausstrasse 14**
**D-2000 Hamburg 11 (DE)**

EP 0 502 858 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

DIALOG INFORMATIONS SERVICES, File 351, World Patent Index 81-91; TOSHIBA CHEM KK: "Polyester insulating coating compsn. obtd. by dissolving polyester resin comsn. in alkylene carbonate"; & JP-A-57 031 967

(74) Vertreter: **Münch, Volker**
**BASF Aktiengesellschaft,**
**Patentabteilung ZDX - C 6**
**D-67056 Ludwigshafen (DE)**

## Beschreibung

Gegenstand der vorliegenden Erfindung sind Drahtlacke, enthaltend

A) Polyesterharze oder Polyesterimidharze oder hydroxylgruppenhaltige Polyester zusammen mit einer Isocyanatkomponente, deren freie Isocyanatgruppen vollständig blockiert sind und

B) Alkylencarbonate der Formel (I)

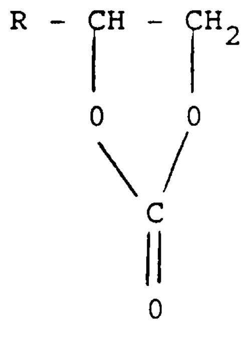

(I)

wobei R entweder Wasserstoff oder einen aliphatischen oder einen cycloaliphatischen oder einen aromatischen oder einen alkylaromatischen Rest darstellt.

Die Erfindung betrifft außerdem Verfahren zum kontinuierlichen Beschichten von Drähten unter Verwendung dieser Drahtlacke.

Heute üblicherweise eingesetzte Drahtlacke stellen im allgemeinen Lösungen der typischen Bindemittel, wie beispielsweise Polyester, Polyesterimide und hydroxylgruppenhaltige Polyester mit blockierten Isocyanaten in Kresol oder anderen phenolischen Lösungsmitteln, ggf. in Kombination mit handelsüblichen Kohlenwasserstoffverschnitten, dar. Mit der Verwendung dieser kresolischen bzw. phenolischen Lösungsmittel sind jedoch zahlreiche Probleme verbunden, beispielsweise Geruchsbelästigungen und Umweltgefährdung aufgrund der Toxizität dieser Lösungsmittel bei Applikation derartiger Drahtlacke. Es bestehen daher Bemühungen, diese kresolischen und phenolischen Lösungsmittel durch andere geeignete Lösungsmittel zu ersetzen. So ist es beispielsweise aus der US-PS 4,609,702 bekannt, Methyldiglykol als alternatives nichtkresolischen Lösungsmittel einzusetzen. Als nachteilig haben sich jedoch die oft nicht vorhandene Lagerstabilität sowie die oft nur unzureichenden Verlaufseigenschaften derartiger Drahtlacke herausgestellt. Weiterhin ist es aus der JP-OS 31 967/82 vom 20.02.1982 bekannt, Alkylencarbonate oder Mischungen von Alkylencarbonaten mit kresolischen oder phenolischen Lösungsmitteln als Lösungsmittel einzusetzen. Der alleinige Einsatz von Alkylencarbonaten als Lösungsmittel hat jedoch den Nachteil, daß die Lösungen der üblicherweise eingesetzten Bindemittel sehr hohe Viskositäten aufweisen, so daß in den üblicherweise eingesetzten Lackieranlagen nur Drahtlacke mit einem relativ niedrigen Festkörper eingesetzt werden können, was wiederum zu einer starken Umweltbelastung beim Einbrennen derartiger Lacke führt. Zusätzlich ungünstig ist auch der hohe Preis von Alkylencarbonaten im Vergleich zu den üblicherweise in Drahtlacken eingesetzten Lösungsmitteln. Die Kombination von Alkylencarbonaten mit kresolischen Lösungsmitteln ist ebenso aufgrund der bereits aufgeführten Nachteile der Verwendung derartiger Lösungsmittel ungünstig.

Auch aus der JP-OS 51000531 sind Drahtlacke bekannt, die als Hauptbestandteil eine Kombination aus einem Alkylencarbonat und einem thermisch härtenden, estergruppenhaltigen Harz enthalten. Zur Erniedrigung der Viskosität der Zusammensetzungen kann der Mischung aus thermisch härtendem Harz und Alkylencarbonat Wasser zugesetzt werden.

Der vorliegenden Erfindung lag somit die Aufgabe zugrunde, Drahtlacke zur Verfügung zu stellen, die die genannten Nachteile der bekannten Drahtlacke vermeiden. Diese Drahtlacke sollten daher insbesondere einen möglichst hohen Festkörpergehalt bei einer für die Verarbeitung günstigen Viskosität aufweisen und zu Beschichtungen mit guten technologischen Eigenschaften führen. Die Drahtlacke sollten dabei aus möglichst günstigen Rohstoffen herstellbar sein, wobei durch die gewählte Rohstoffbasis gleichzeitig für eine möglichst geringe Umweltbelastung bei der Applikation der Drahtlacke gesorgt wird.

Diese Aufgabe wird überraschenderweise gelöst durch Drahtlacke, enthaltend

A) Polyesterharze oder Polyesterimidharze oder hydroxylgruppenhaltige Polyester, zusammen mit einer Isocyanatkomponente, deren freie Isocyanatgruppen vollständig blockiert sind und

B) Alkylencarbonate der Formel (I)

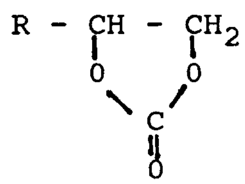

(I)

wobei R entweder Wasserstoff oder einen aliphatischen oder einen cycloaliphatischen oder einen aromatischen oder einen alkylaromatischen Rest darstellt,
dadurch gekennzeichnet, daß sie als Komponente A

1.) 15 bis 55 Gew.-%, bevorzugt 40 bis 50 Gew.-%, bezogen auf das Gesamtgewicht des Drahtlackes, eines oder mehrerer Polyesterharze oder

2.) 15 bis 60 Gew.-%, bevorzugt 30 bis 50 Gew.-%, bezogen auf das Gesamtgewicht des Drahtlackes, eines oder mehrerer Polyesterimidharze oder

3.) 18 bis 40 Gew.-%, bevorzugt 25 bis 35 Gew.-%, bezogen auf das Gesamtgewicht des Drahtlackes, eines oder mehrerer hydroxylgruppenhaltiger Polyester und einer oder mehrerer Isocyanatkomponenten, deren freie Isocyanatgruppen vollständig blockiert sind, enthalten,

und daß sie

a) 95 bis 70 Gew.-%, bevorzugt 90 bis 80 Gew.-%, bezogen auf das Gesamtgewicht des Lösungsmittels, cyclische Alkylencarbonate der Formel (I) und

b) 5 bis 30 Gew.-%, bevorzugt 10 bis 20 Gew.-%, bezogen auf das Gesamtgewicht des Lösungsmittels, aromatische und/oder aliphatische Kohlenwasserstoffe mit einem Siedepunkt zwischen 100 und 200 °C als weitere Lösungsmittel (C) enthalten, wobei kresolische und phenolische Lösungsmittel ausgenommen sind.

Gegenstand der vorliegenden Erfindung sind außerdem Verfahren zum kontinuierlichen Beschichten von Drähten, bei dem diese Drahtlacke auf der Drahtoberfläche appliziert und anschließend eingebrannt werden.

Es ist überraschend und war nicht vorhersehbar, daß durch Zusatz von aromatischen und/oder aliphatischen Kohlenwasserstoffen zu Drahtlacken, die cyclische Alkylencarbonate als Lösungsmittel enthalten, die Viskosität der Drahtlacke im Vergleich zu Drahtlacken, die nur die Alkylencarbonate als Lösungsmittel enthalten, deutlich erniedrigt wird. Entsprechend weisen die erfindungsgemäßen Lacke bei einer für die Verarbeitung günstigen Viskosität höhere Festkörpergehalte auf als Drahtlacke, die nur Alkylencarbonate als Lösungsmittel enthalten, so daß durch die erfindungsgemäßen Lacke die Umweltbelastung beim Einbrennen der Lacke verringert wird. Dabei ist es überraschend, daß der Zusatz von aromatischen und/oder aliphatischen Kohlenwasserstoffen nicht zu Verträglichkeitsproblemen führt, da diese Lösungsmittel die als Bindemittel in den Drahtlacken eingesetzten Polyester- und Polyesterimidharze nicht lösen.
Weiterhin weisen die erfindungsgemäßen Drahtlacke den Vorteil auf, daß aliphatische und aromatische Kohlenwasserstoffe leicht verfügbare und preisgünstige Lösungsmittel darstellen, die im Gegensatz zu phenolischen und kresolischen Lösungsmitteln bei der Verarbeitung beispielsweise nicht zu einer Geruchsbelästigung u. dgl. führen.
Von Vorteil ist schließlich auch das gute technische Eigenschaftsniveau der resultierenden Drahtbeschichtungen.

Im folgenden sollen nun zunächst die einzelnen Komponenten der erfindungsgemäßen Drahtlacke näher erläutert werden.

Die verwendeten Polyesterimidharze sind bekannt und sind beispielsweise beschrieben in DE-OS 14 45 263 und DE-OS 14 95 100. Die Herstellung der Polyesterimide erfolgt in bekannter Weise durch Veresterung der mehrwertigen Carbonsäuren mit den mehrwertigen Alkoholen, gegebenenfalls unter Zusatz von Oxicarbonsäuren, und unter Verwendung von imidgruppenhaltigen Ausgangsstoffen. Anstelle der freien Säuren und/oder Alkohole können auch deren reaktionsfähige Derivate eingesetzt werden. Als Carbonsäurekomponente wird vorzugsweise Terephthalsäure eingesetzt, und als mehrwertige Alkohole werden bevorzugt Ethylenglykol, Glycerin und Tris-2-hydroxiethylisocyanurat, wobei letzteres besonders bevorzugt ist, eingesetzt. Die Verwendung von Tris-2-hydroxiethylisocyanurat führt zu einer Erhöhung der Erweichungstemperatur des erhaltenen Lackfilms.
Die imidgruppenhaltigen Ausgangsstoffe können beispielsweise durch Reaktion zwischen Verbindungen erhalten werden, von denen die eine eine fünfgliedrige, cyclische Carbonsäureanhydridgruppierung sowie mindestens noch eine weitere funktionelle Gruppe besitzen muß, während die andere außer einer primären

Aminogruppe noch mindestens eine weitere funktionelle Gruppe enthält. Diese weiteren funktionellen Gruppen sind vor allem Carboxylgruppen oder Hydroxylgruppen, es können jedoch auch weitere primäre Aminogruppen oder Carbonsäureanhydridgruppen sein.

Beispiele für Verbindungen mit einer cyclischen Carbonsäureanhydridgruppierung mit einer weiteren funktionellen Gruppe sind vor allem Pyromellithsäuredianhydrid und Trimellithsäureanhydrid. Es kommen jedoch auch andere aromatische Carbonsäureanhydride in Frage, beispielsweise die Naphthalintetracarbonsäuredianhydride oder Dianhydride von Tetracarbonsäuren mit zwei Benzolkernen im Molekül, bei denen die Carboxylgruppen in 3,3'4- und 4'-Stellung stehen.

Beispiele für Verbindungen mit einer primären Aminogruppe sowie einer weiteren funktionellen Gruppe sind insbesondere diprimäre Diamine, z.B. Ethylendiamin, Tetramethylendiamin, Hexamethylendiamin, Nonamethylendiamin und andere aliphatische diprimäre Diamine. Ferner kommen in Betracht aromatische diprimäre Diamine, wie Benzidin, Diaminodiphenylmethan, Diaminodiphenylketon, -sulfon, -sulfoxyd, -ether und -thioether, Phenylendiamine, Toluylendiamine, Xylylendiamine sowie auch Diamine mit drei Benzolkernen im Molekül, wie Bis(4-aminophenyl)-$\alpha,\alpha$ '-p-xylol oder Bis(4-aminophenoxy)- 1,4-benzol, und schließlich cycloaliphatische Diamine, wie das 4,4'-Dicyclohexylmethandiamin. Als aminogruppenhaltige Verbindungen mit einer weiteren funktionellen Gruppe sind ferner auch Aminoalkohole verwendbar, z.B. Monoethanolamin oder Monopropanolamine, weiterhin Aminocarbonsäuren, wie Glycin, Aminopropionsäuren, Aminocapronsäuren oder Aminobenzoesäuren.

Zur Herstellung der Polyesterimidharze werden bekannte Umesterungskatalysatoren verwendet, beispielsweise Schwermetallsalze, wie Bleiacetat, Zinkacetat, weiterhin organische Titanate, wie z.B. Triethanolamintitanat, Cerverbindungen sowie organische Säuren, wie z.B. para-Toluolsulfonsäure. Als Vernetzungskatalysatoren bei der Aushärtung der Polyesterimide können die gleichen Umesterungskatalysatoren - zweckmäßigerweise in einem Anteil bis zu 3 Gew.-%, bezogen auf das Bindemittel, - verwendet werden.

Die Polyesterimide werden in den erfindungsgemäßen Drahtlacken üblicherweise in Mengen von 15 bis 60 Gew.-%, bevorzugt von 30 bis 50 Gew.-%, bezogen auf das Gesamtgewicht des Drahtlackes, eingesetzt.

Die verwendeten Polyesterharze sind ebenfalls bekannt und beispielsweise beschrieben in der US-PS 3,342,780 und in der EP-B-144 281. Die Herstellung der Polyester erfolgt in bekannter Weise durch Veresterung von mehrwertigen Carbonsäuren mit mehrwertigen Alkoholen in Gegenwart geeigneter Katalysatoren.

Anstelle der freien Säure können auch deren esterbildende Derivate eingesetzt werden.

Für die Herstellung der Polyester geeignete Alkohole sind beispielsweise Ethylenglykol, Propylenglykol-1,2 und 1,3, Butandiol-1,2, - 1,3 und - 1,4, Pentandiol-1,5, Neopentylglykol, Diethylenglykol, Triethylenglykol sowie Triole, wie z.B. Glycerin, Trimethylolethan, Trimethylolpropan und Tris-2-hydroxiethylisocyanurat. Bevorzugt eingesetzt werden Mischungen von Ethylenglykol und Tris-2-hydroxyethylisocyanurat. Die Verwendung von Tris-2-hydroxyethylisocyanurat führt zu hohen Erweichungstemperaturen der Lackschicht.

Geeignete Carbonsäuren sind beispielsweise Phthalsäure, Isophthalsäure, Terephthalsäure sowie deren veresterbaren Derivate, wie z.B. die Anhydride, soweit sie existieren und die niederen Alkylester der genannten Säuren, wie z.B. Methyl-, Ethyl-, Propyl-, Butyl-, Amyl-, Hexyl- und Octylphthalate, -terephthalate und -isophthalate. Einsetzbar sind sowohl die Halbester, die Dialkylester als auch Mischungen dieser Verbindungen. Einsetzbar sind auch die entsprechenden Säurehalogenide dieser Verbindungen.

Die Mengen der einzelnen Komponenten werden so gewählt, daß die Polyester ein Verhältnis von Hydroxyl- zu Carboxylgruppen von 1,1 : 1 bis 2,0 : 1, bevorzugt von 1,15 :1 bis 1,60 : 1, aufweisen.

Für die Herstellung der Polyester geeignete Katalysatoren, die in Mengen von 0,01 bis 5 Gew.-%, bezogen auf das Einsatzgemisch, eingesetzt werden, sind übliche Veresterungskatalysatoren. Beispiele für geeignete Verbindungen sind bereits bei der Beschreibung der Polyesterimide aufgeführt.

Die Polyesterharze werden in den erfindungsgemäßen Drahtlacken üblicherweise in Mengen von 15 bis 55 Gew.-%, bevorzugt von 40 bis 50 Gew.-%, jeweils bezogen auf das Gesamtgewicht des Drahtlackes, eingesetzt.

Auch die für Drahtlacke auf Polyurethan-Basis eingesetzten Kombinationen aus einem oder mehreren hydroxylgruppenhaltigen Polyestern mit im allgemeinen einer OH-Zahl von 200 bis 900 mg KOH/g, bevorzugt von 250 bis 750 mg KOH/g und einem oder mehreren blockierten Isocyanataddukten sind bereits bekannt und beispielsweise in der DE-OS 28 40 352 und der DE-OS 25 45 912 beschrieben.

Für die Herstellung der hydroxylgruppenhaltigen Polyester können die gleichen Aufbaukomponenten (Polyol und Polycarbonsäure) und die gleichen Reaktionsbedingungen wie bei der Herstellung der Polyester-Drahtlacke angewandt werden. Für Einzelheiten sei daher auf die Seiten 6 bis 7 dieser Beschreibung verwiesen.

Die Isocyanataddukte werden hergestellt durch Umsetzung eines Diisocyanates mit einem Polyol, wobei die Mengen dieser Verbindungen so gewählt werden, daß das NCO: OH-Äquivalentverhältnis zwischen 1 : 2

und 9 : 1 beträgt. Die restlichen freien Isocyanatgruppen dieses Adduktes werden mit einem Blockierungsmittel umgesetzt.

Es ist aber selbstverständlich auch möglich, die Isocyanate zunächst mit dem Blockierungsmittel und die restlichen, freien Isocyanatgruppen mit dem Polyol umzusetzen.

Der Aufbau des Isocyanatadduktes wird vorteilhafterweise in einem gegenüber Isocyanatgruppen inerten, das entstehende Polyurethan gut lösenden Lösungsmittel in Gegenwart eines Katalysators bei Temperaturen von 30 bis 120 °C durchgeführt.

Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,5-Toluylendiisocyanat, 2,6-Toluylendiisocyanat, 4,4'-Bisphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, Bis-(4-isocyanatophenyl)-methan, 4,4'-Diisocyanatodiphenylether und 2,3-Bis-(8-isocyanatooctyl)-4-octyl-5-hexylcyclohexen.

Bevorzugt eingesetzt werden Toluylendiisocyanat und Bis-(4-isocyanatophenyl)-methan.

Beispiele von geeigneten Polyolen für die Adduktbildung sind Trimethylolpropan, Neopentylglykol, Glycerin, Hexantriol, Pentaerythrit und Glykole, wie z.B. Ethylenglykol und Propylenglykol. Bevorzugt eingesetzt wird Trimethylolpropan. Ganz besonders bevorzugt eingesetzt wird ein Addukt aus 1 mol Trimethylolpropan und 3 mol Toluylendiisocyanat und/oder Bis-(4-isocyanatophenyl)-methan.

Für die Blockierung der freien Isocyanatgruppen geeignet sind alle bekannten Blockierungsmittel, wobei aber gewährleistet sein muß, daß eine Deblockierung erst bei Temperaturen oberhalb von 120 °C eintritt. Beispiele für geeignete Verbindungen sind aliphatische, cycloaliphatische oder aromatische Alkohole, wie z.B. Butanol, Isobutanol, 2-Ethylhexanol, Cyclohexanol, Cyclopentanol, Benzylalkohol, Phenole, Kresole; $\beta$-Hydroxialkylether, wie z.B. Methyl-, Ethyl-, Butylglykol; Amine, wie z.B. Di-n-butylamin, Di-n-hexylamin; Oxime, wie z.B. Methylethylketoxim, Diethylketoxim; Hydroxylamine und Lactame, wie z.B. $\epsilon$-Caprolactam sowie andere Verbindungen, die ein Wasserstoffatom enthalten, das durch seine Reaktivität eine Umsetzung des Blockierungsmittels mit dem Isocyanat ermöglicht.

Als bevorzugte Blockierungsmittel werden Phenole eingesetzt.

Der hydroxylgruppenhaltige Polyester und das blockierte Isocyanataddukt werden in den erfindungsgemäßen Drahtlacken üblicherweise in einer Gesamtmenge von 18 bis 40 Gew.-%, bevorzugt von 25 bis 35 Gew.-%, bezogen auf das Gesamt- gewicht des Drahtlackes, eingesetzt. Die Menge an blockiertem Isocyanataddukt liegt dabei zwischen 150 und 500 Gewichtsteilen je 100 Gewichtsteile hydroxylgruppenhaltigem Polyester.

Die in den erfindungsgemäßen Drahtlacken eingesetzten Bindemittel (Polyester, Polyesterimide, hydroxylgruppenhaltige Polyester zusammen mit einem blockierten Isocyanataddukt) können durch die bekannten Verfahren der Schmelzkondensation oder durch Lösungskondensation in einem adäquaten Lösungsmittel, wie beispielsweise N-Methylpyrrolidon, Methyldiglykol, Ethyldiglykol und Ethylenglykol hergestellt werden.

Neben den beschriebenen Bindemitteln und Härtern im Falle der Drahtlacke auf Polyurethan-Basis enthalten die Drahtlacke im allgemeinen noch Vernetzungskatalysatoren. Im Falle der Drahtlacke auf Polyester- und Polyesterimid-Basis werden die bereits beschriebenen Umesterungskatalysatoren, insbesondere Titanverbindungen, wie z.B. Triethanolamintitanat, eingesetzt, und zwar üblicherweise in Mengen von 0,5 bis 3,0 Gew.-%, bezogen auf das Gewicht des Bindemittels. Im Falle der Drahtlacke auf Polyurethan-Basis haben sich Übergangsmetallverbindungen sowie tertiäre Amine als Vernetzungskatalysatoren bewährt, die üblicherweise in Mengen von 0,5 bis 2,0 Gew.-%, bezogen auf das Gesamtgewicht von hydroxylgruppenhaltigen Polyester und blockiertem Isocyanataddukt, eingesetzt werden.

Außerdem können die Drahtlacke ggf. noch übliche Hilfs- und Zusatzstoffe in üblichen Mengen, bevorzugt 0 bis 1 Gew.-%, bezogen auf das Gewicht des Bindemittels bzw. bezogen auf das Gewicht von Bindemittel und Härter enthalten. Als Hilfsmittel für die Drahtlacke können beispielsweise verlaufsverbessernde Phenol- oder Melaminharze oder andere übliche Verlaufsmittel, z.B. auf Basis von Polyacrylaten eingesetzt werden.

Als erfindungswesentliche Komponente enthalten die Drahtlacke als Lösungsmittel eine Mischung aus a) einem oder mehreren cyclischen Carbonaten der Formel (I)

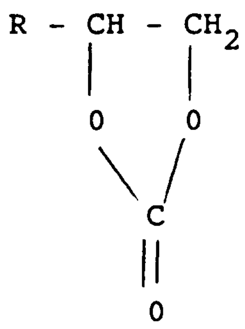

(I)

wobei R entweder Wasserstoff oder einen aliphatischen oder cycloaliphatischen oder aromatischen oder alkylaromatischen Rest darstellt
und b) einem oder mehreren Kohlenwasserstoffen.

Diese als Lösungsmittel für die erfindungsgemäßen Drahtlacke eingesetzte Mischung enthält vorzugsweise 95 bis 70 Gew.-%, besonders bevorzugt 90 bis 80 Gew.-%, cyclische Carbonate der Formel (I) und 5 bis 30 Gew.-%, besonders bevorzugt 10 bis 20 Gew.-%, Kohlenwasserstoffe, jeweils bezogen auf das Gesamtgewicht des Lösungsmittels.

Beispiele für geeignete cyclische Carbonate der Formel (I) sind Ethylencarbonat, Propylencarbonat, Isobutylencarbonat und 4-Phenyl-1,3-dixolan-2- an. Bevorzugt eingesetzt werden Ethylencarbonat, Propylencarbonat und Isobutylencarbonat.
Beispiele für geeignete Kohlenwasserstoffe sind Xylol, Toluol sowie Mischungen verschiedener aromatischer und/oder aliphatischer Kohlenwasserstoffe mit einem Siedebereich von bevorzugt 100 bis 200 °C, beispielsweise verschiedene handelsübliche Kohlenwasserstoffgemische, wie z.B. Solvent Naphtha®, einem bei der Fraktionierung von Leichtöl aus der Teerdestillation erhaltenen aromatenreichen Gemisch, mit einem Siedebereich von 150 bis 195 °C, wobei mindestens 90 % der Destillatmenge bei 180 °C übergehen sollen; verschiedene Solvesso®-Typen, einem mehr als 97 Vol.-% Aromaten enthaltenden Lösungsmittel mit einem Siedebereich von 140 bis 200 °Cje nach Typ. Bevorzugt eingesetzt werden Solvent Naphtha®, Xylol und verschiedene Solvesso®-Typen.

Ggf. können die erfindungsgemäßen Drahtlacke noch 0 bis 10 Gew.-%, bezogen auf das Gesamtgewicht des Drahtlackes, weiterer Lösungsmittel, beispielsweise N-Methylpyrrolidon, Methyldiglykol, Ethyldiglykol oder Ethylenglykol, insbesondere im Fall der Herstellung der Bindemittel mittels Lösungskondensation, enthalten.

Die erfindungsgemäßen Drahtlacke weisen üblicherweise bei 23 °C Viskositäten zwischen 50 und 500 mPas bei einem Festkörpergehalt von 25 bis 50 % auf.
Die Drahtlacke werden nach den üblichen Verfahren hergestellt.
Diese Drahtlacke werden mittels üblicher Drahtlackiermaschinen aufgebracht und gehärtet. Dabei wird die jeweils erforderliche Lackfilmstärke durch mindestens 1 bis zu 10 Einzelaufträgen aufgebaut, wobei jeder einzelne Lackauftrag vor dem erneuten Lackauftrag blasenfrei ausgehärtet wird. Übliche Lackiermaschinen arbeiten mit Abzugsgeschwindigkeiten von 5 bis 180 m/min, je nach Bindemittelbasis des Drahtlackes und je nach Dicke des zu beschichtenden Drahtes. Typische Ofentemperaturen betragen zwischen 300 und 550 °C. Derartige Drahtlackiermaschinen sind aber bekannt und brauchen daher hier nicht näher erläutert werden.

Im folgenden wird nun die Erfindung anhand von Ausführungsbeispielen näher erläutert. Alle Angaben über Teile und Prozente stellen dabei Gewichtsangaben dar, falls nicht ausdrücklich etwas anderes angegeben wird.

1. Herstellung eines THEIC-freien Polyesterimids 1

Aus 420 g Ethylenglykol, 137,1 g Dimethylterephthalat, 218,4 g 4,4'-Diaminodiphenylmethan und 723,6 g Trimellithsäureanhydrid wird in Gegenwart von 0,45 g Bleiacetat und 0,45 g Zinkacetat durch Aufheizen auf 230 °C ein Polyesterimid hergestellt. Dabei wird 181 g Destillat erhalten. Die Säurezahl des Endproduktes beträgt max. 5 mg KOH/g. Der Hydroxylgehalt schwankt zwischen 5 % und 6 %.

2. Herstellung eines THEIC-haltigen Polyesterimids 2

Aus 72,8 g Ethylenglykol, 118,6 g Trishydroxiethylisocyanurat (THEIC), 102,3 g Dimethylterephthalat, 69,5 g 4,4'-Diaminodiphenylmethan, 135,1 g Trimellithsäureanhydrid, 48,8 g Methyldiglykol und 0,4 g Tetra-n-butyltitanat wird durch Erhitzen auf 200 °C ein Polyesterimid hergestellt. Bei der Reaktion fallen 59,1 g Destillat an. Das Polyesterimid hat eine Säurezahl von 20 mg KOH/g und eine OH-Zahl von 270 mg KOH/g.

3. Herstellung eines Hydroxypolyesters 3 für einen Polyurethanlack

Aus 387,3 g Glycerin, 140,9 g Ethylenglykol, 471,4 g Isophthalsäure und 0,4 g Zinn(II)oxalat wird durch Erhitzen auf 230 °C ein Polyester mit einer Säurezahl < 5 mg KOH/g und einem OH-Äquivalent von 78 hergestellt.

Beispiel 1

In 530,6 g Propylencarbonat werden 318,6 g THEIC-freies Polyesterimid 1 gelöst. Danach werden 132,6 g Solventnaphtha®, 6,8 g Titanacetylacetonat und 5,7 g einer handelsüblichen 80 %igen butanolischen Lösung eines epoximodifizierten Phenolharzes (Auslaufzeit einer 60 %igen butanolischen Lösung bei 23 °C = 35 s im DIN 4 Becher) zugegeben. Der so eingestellte Lack 1 hat einen Festkörper (1 g/1 h/180 °C) von 32 % bei einer Auslaufzeit (DIN 4 mm Becher 23 °C) von 26 Sekunden.

Ein Kupferdraht (Durchmesser 0,5 mm) wird auf einer 1-Gang-Lackiermaschine (Auftragssystem Pumpe/Filz) mit 8 Durchzügen lackiert, wobei jede Lackschicht jeweils direkt im Anschluß an die Applikation bei einer Temperatur von 500 °C eingebrannt wird (Ofenlänge 2,60 m). Die Abzugsgeschwindigkeit wird dabei zwischen 16 und 20 m/min. variiert. Der Drahtdurchmesser nimmt dabei zwischen 0,045 und 0,065 µm zu.
Die Prüfung der technologischen Eigenschaften der resultierenden Beschichtungen bezüglich Dehnung und Haftung erfolgte nach der IEC-Norm ("IEC-Standard Publication 851, Methods of Tests for Winding wires") 851, Teil 1 - 6.
Die Prüfergebnisse sind in Tabelle 1 dargestellt.

Tabelle 1

| Prüfungen | Abzugsgeschwindigkeit (m/min) 16 | 17 | 18 | 20 |
|---|---|---|---|---|
| Erweichungstemperatur (°C) | 350 | 340 | 340 | 340 |
| Haftung und Dehnbarkeit: Wickellocke über 0,5 mm Dorn ohne Risse nach Vordehnung (%) | 20 | 20 | 25 | 22 |

Beispiel 2

472,2 g THEIC-haltiges Polyesterimid 2 werden in 409,8 g Propylencarbonat gelöst. 102,2 g Solvent Naphtha®, 2,1 g einer handelsüblichen 80 %igen butanolischen Lösung eines epoximodifizierten Phenolharzes (eine 60 %ige butanolische Lösung dieses Harzes weist bei 23 °C eine Viskosität von 35 s im DIN 4

mm Becher auf) und 8,6 g Triethanolamintitanat werden zugegeben. Der so erhaltene Lack 2 hat bei einer Viskosität von 390 mPas (23 °C) einen Festkörper von 44,0 % (1 g/1 h/180 °C).

Ein Kupferdraht (Durchmesser 0,71 mm) wird auf einer 1-Gang-Lackiermaschine (Auftragssysteme Pumpe/Filz) mit 8 Durchzügen lackiert (Zunahme des Drahtdurchmessers 0,056 mm), wobei jede Lackschicht jeweils direkt im Anschluß an die Applikation bei einer Temperatur von 500 °C eingebrannt wird (Ofenlänge 4 m). Die Abzugsgeschwindigkeit wird dabei zwischen 24 und 32 m/min. variiert (vgl. Tabelle 2).

Die Prüfung der technologischen Eigenschaften der resultierenden Beschichtung erfolgt analog Beispiel 1. Die Prüfergebnisse sind in Tabelle 2 dargestellt.

Tabelle 2

| Prüfungen | Abzugsgeschwindigkeit (m/min) 24 | 28 | 32 |
|---|---|---|---|
| Erweichungstemperatur (°C) | 400 | 390 | 380 |
| Haftung und Dehnbarkeit: Wickellocke über 0,71 mm Dorn ohne Risse nach Vordehnung (%) | 10 | 15 | 20 |

Beispiel 3

447,6 g THEIC-haltiges Polyesterimidharz 2 werden in 357,1 g Isobutylencarbonat gelöst. Nach der Zugabe von 2,0 g einer handelsüblichen 80 %igen butanolischen Lösung eines epoximodifizierten Phenolharzes (Viskosität einer 60 %igen butanolischen Lösung bei 23 ° C von 35 s im DIN 4 mm Becher) und 8,1 g Triethanolamintitanat wird der Lack mit 185,2 g Solvent Naphtha® auf eine Viskosität von 330 mPas (23 ° C) eingestellt. Der Festkörper des so erhaltenen Lackes 3 beträgt 39,2 % (1 g/1 h/180 ° C).

Die Applikation dieses Lackes 3 sowie die Prüfung der resultierenden Beschichtung erfolgt analog Beispiel 2. Die Prüfergebnisse sind in Tabelle 3 dargestellt.

Tabelle 3

| Prüfungen | Abzugsgeschwind. (m/min.) 28 |
|---|---|
| Erweichungstemperatur ( ° C) | 380 |
| Haftung und Dehnbarkeit: | |
| Wickellocke über 0,5 mm Dorn ohne Risse nach Vordehnung (%) | 25 |

Beispiel 4

In 505,2 g Propylencarbonat werden 291,6 g eines handelsüblichen blockierten Isocyanates aus 3 mol Toluylendiisocyanat, 1 mol Trimethylolpropan und 3 mol Phenol, 65,8 g des Hydroxipolyesters 3 und 2,3 g eines handelsüblichen Katalysator auf Basis eines aromatischen Amins gelöst. Danach werden 135,1 g Xylol zugemischt. Der so erhaltene Lack 4 hat eine DIN 4-Auslaufzeit von 21 s bei 23 ° C bei einem Festkörper von 28,9 % (1 g/1 h/180 ° C).

Ein Kupferdraht (Durchmesser 0,50 mm) wird auf einer 1-Gang-Lackiermaschine (Auftragssysteme Pumpe/Filz) mit 8 Durchzügen lackiert (Zunahme des Drahtdurchmessers von 0,045 mm), wobei jede Lackschicht jeweils direkt im Anschluß an die Applikation bei einer Temperatur von 500 ° C eingebrannt wird (Ofenlänge 1,5 m). Der Lack ließ sich dabei mit Abzugsgeschwindigkeiten von bis zu 50 m/min lackieren. Die Prüfung der resultierenden Beschichtung erfolgte analog Beispiel 1. Die Ergebnisse sind in Tabelle 4 dargestellt.

Tabelle 4

| Prüfungen | Abzugsgeschwind. (m/min.) 36 |
|---|---|
| Erweichungstemperatur ( ° C) | 240 - 250 |
| Haftung und Dehnbarkeit: | |
| Wickellocke über 0,5 mm Dorn ohne Risse nach Vordehnung (%) | 10 |

Beispiel 5

In einem Gemisch aus 532,1 g Propylencarbonat und 133,0 g Solvent Naphtha® werden 360 g THEIC-freies Polyesterimid 1, 6,4 g der in Beispiel 1 beschriebenen 80 %igen butanolischen Lösung eines epoximodifizierten Phenolharzes und 7,7 g Titanacetylacetanat gelöst.
Der so erhaltene Lack 5 hat bei einem Festkörper von 35,4 % (1 g/1 h/180 ° C) eine Viskosität von 175 mPas bei 23 ° C.

Vergleichsbeispiel 1

In 665,1 g Propylencarbonat werden 360 g THEIC-freies Polyesterimid 1 gelöst. Nach Zugabe von 7,7 g Titanacetylacetonat und 6,4 g der in Beispiel 1 beschriebenen 80 %igen butanolischen Lösung eines epoximodifizierten Phenolharzes enthält man einen Lack 6, der bei einem Festkörper von 35,6 % (1 g/1

h/180 °C) eine Viskosität bei 23 °C von 302 mPas hat.

Beispiel 6

In einer Mischung aus 518,4 g Propylencarbonat und 130 g Solvent Naphtha® werden 539,9 g des THEIC-haltigen Polyesterimids 2, 2,4 g der in Beispiel 1 beschriebenen 80 %igen butanolischen LÖsung eines epoximodifizierten Phenolharzes und 9,8 g Triethanolamintitanat gelöst. Bei einem Festkörpergehalt von 45,7 % (1 g/1 h/180 °C) hat der so erhaltene Lack 7 eine Viskosität von 470 mPas (23 °C).

Vergleichsbeispiel 2

In 540,0 g Propylencarbonat werden 450,0 g THEIC-haltiges Polyesterimid 2, 2,0 g der in Beispiel 1 beschriebenen 80 %igen butanolischen Lösung eines epoximodifizierten Phenolharzes und 8,2 g Triethanolamintitanat gelöst. Der so erhaltene Lack 8 hat bei einem Festkörper von 45,6 % (1 g/1 h/180 °C) eine Viskosität (23 °C) von 620 mPas.

Vergleichsbeispiel 3

In 650,8 g Propylencarbonat werden 283 g eines handelsüblichen blockierten Isocyanates aus 3 mol Toluylendiisocyanat, 1 mol Trimethylolpropan und 3 mol Phenol, 64,0 g des Hydroxipolyesters 3 und 2,2 g eines handelsüblichen Katalysators auf Basis eines aromatischen Amins gelöst. Der so erhaltene Lack hat bei einer Auslaufzeit (DIN 4-Becher) von 21 s bei 23 °C einen Festkörper von 27,1 % (1 g/1 h/180 °C).

**Patentansprüche**

**Patentansprüche für folgende Vertragsstaaten : AT, BE, CH, DE, DK, FR, GB, IT, LI, NL, SE**

**1.** Drahtlacke, enthaltend

A) Polyesterharze oder Polyesterimidharze oder hydroxylgruppenhaltige Polyester zusammen mit einer Isocyanatkomponente, deren freie Isocyanatgruppen vollständig blockiert sind und

B) Alkylencarbonate der Formel (I)

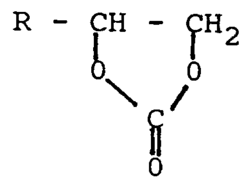

(I)

wobei R entweder Wasserstoff oder einen aliphatischen oder einen cycloaliphatischen oder einen aromatischen oder einen alkylaromatischen Rest darstellt, dadurch gekennzeichnet, daß sie als Komponente A

1.) 15 bis 55 Gew.-%, bevorzugt 40 bis 50 Gew.-%, bezogen auf das Gesamtgewicht des Drahtlackes, eines oder mehrerer Polyesterharze oder

2.) 15 bis 60 Gew.-%, bevorzugt 30 bis 50 Gew.-%, bezogen auf das Gesamtgewicht des Drahtlackes, eines oder mehrerer Polyesterimidharze oder

3.) 18 bis 40 Gew.-%, bevorzugt 25 bis 35 Gew.-%, bezogen auf das Gesamtgewicht des Drahtlackes, eines oder mehrerer hydroxylgruppenhaltiger Polyester und einer oder mehrerer Isocyanatkomponenten, deren freie Isocyanatgruppen vollständig blockiert sind, enthalten,

und daß sie

a) 95 bis 70 Gew.-%, bevorzugt 90 bis 80 Gew.-%, bezogen auf das Gesamtgewicht des Lösungsmittels, cyclische Alkylencarbonate der Formel (I) und

b) 5 bis 30 Gew.-%, bevorzugt 10 bis 20 Gew.-%, bezogen auf das Gesamtgewicht des Lösungsmittels, aromatische und/oder aliphatische Kohlenwasserstoffe mit einem Siedepunkt zwischen 100 und 200 °C als weitere Lösungsmittel (C) enthalten, wobei kresolische und phenolische Lösungsmittel ausgenommen sind.

2. Drahtlacke nach Anspruch 1, dadurch gekennzeichnet, daß als cyclische Alkylencarbonate der Formel (I) Ethylencarbonat, Propylencarbonat und/oder Isobutylencarbonat eingesetzt werden.

3. Drahtlacke nach Anspruch 1 oder 2, dadurch gekennzeichnet, daß als weiteres Lösungsmittel (C) aromatische Kohlenwasserstoffe oder Mischungen verschiedener Kohlenwasserstoffe mit einem Gehalt an aromatischen Kohlenwasserstoffen von mindestens 90 Masse-% eingesetzt werden.

4. Drahtlacke nach einem der Ansprüche 1 bis 3, dadurch gekennzeichnet, daß sie als Komponente A ein trishydroxyethylisocyanurathaltiges Polyesterimid enthalten.

5. Verfahren zum kontinuierlichen Beschichten von Drähten, bei dem zunächst ein Drahtlack auf der Drahtoberfläche appliziert und anschließend eingebrannt wird, dadurch gekennzeichnet, daß ein Drahtlack nach einem der Ansprüche 1 bis 4 eingesetzt wird.

**Patentansprüche für folgenden Vertragsstaat : ES**

1. Verfahren zur Herstellung von Drahtlacken, enthaltend
   A) Polyesterharze oder Polyesterimidharze oder hydroxylgruppenhaltige Polyester zusammen mit einer Isocyanatkomponente, deren freie Isocyanatgruppen vollständig blockiert sind und
   B) Alkylencarbonate der Formel (I)

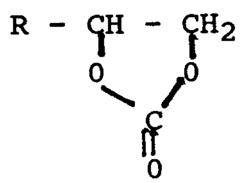

(I)

wobei R entweder Wasserstoff oder einen aliphatischen oder einen cycloaliphatischen oder einen aromatischen oder einen alkylaromatischen Rest darstellt, dadurch gekennzeichnet, daß sie als Komponente A
   1.) 15 bis 55 Gew.-%, bevorzugt 40 bis 50 Gew.-%, bezogen auf das Gesamtgewicht des Drahtlackes, eines oder mehrerer Polyesterharze oder
   2.) 15 bis 60 Gew.-%, bevorzugt 30 bis 50 Gew.-%, bezogen auf das Gesamtgewicht des Drahtlackes, eines oder mehrerer Polyesterimidharze oder
   3.) 18 bis 40 Gew.-%, bevorzugt 25 bis 35 Gew.-%, bezogen auf das Gesamtgewicht des Drahtlackes, eines oder mehrerer hydroxylgruppenhaltiger Polyester und einer oder mehrerer Isocyanatkomponenten, deren freie Isocyanatgruppen vollständig blockiert sind, enthalten,

und daß sie
   a) 95 bis 70 Gew.-%, bevorzugt 90 bis 80 Gew.-%, bezogen auf das Gesamtgewicht des Lösungsmittels, cyclische Alkylencarbonate der Formel (I) und
   b) 5 bis 30 Gew.-%, bevorzugt 10 bis 20 Gew.-%, bezogen auf das Gesamtgewicht des Lösungsmittels, aromatische und/oder aliphatische Kohlenwasserstoffe mit einem Siedepunkt zwischen 100 und 200 °C als weitere Lösungsmittel (C) enthalten, wobei kresolische und phenolische Lösungsmittel ausgenommen sind.

2. Verfahren nach Anspruch 1, dadurch gekennzeichnet, daß als cyclische Alkylencarbonate der Formel (I) Ethylencarbonat, Propylencarbonat und/oder Isobutylencarbonat eingesetzt werden.

3. Verfahren nach Anspruch 1 oder 2, dadurch gekennzeichnet, daß als weiteres Lösungsmittel (C) aromatische Kohlenwasserstoffe oder Mischungen verschiedener Kohlenwasserstoffe mit einem Gehalt an aromatischen Kohlenwasserstoffen von mindestens 90 Masse-% eingesetzt werden.

4. Verfahren nach einem der Ansprüche 1 bis 3, dadurch gekennzeichnet, daß die Drahtlacke als Komponente A ein trishydroxyethylisocyanurathaltiges Polyesterimid enthalten.

**5.** Verfahren zum kontinuierlichen Beschichten von Drähten, bei dem zunächst ein Drahtlack auf der Drahtoberfläche appliziert und anschließend eingebrannt wird, dadurch gekennzeichnet, daß ein Drahtlack, der nach einem Verfahren nach einem der Ansprüche 1 bis 4 hergestellt wurde,eingesetzt wird.

## Claims

**Claims for the following Contracting States : AT, BE, CH, DE, DK, FR, GB, IT, LI, NL, SE**

**1.** Wire enamels containing

A) polyester resins or polyester-imide resins or polyesters containing hydroxyl groups together with an isocyanate component in which the free isocyanate groups are completely masked and

B) alkylene carbonates of the formula [I)

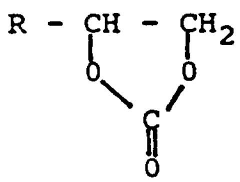

(I)

in which R represents either hydrogen or an aliphatic or cycloaliphatic or aromatic or alkyl-aromatic radical, characterized in that they contain, as the component A,

1.) 15 to 55% by weight, preferably 40 to 50% by weight, relative to the total weight of the wire enamel, of one or more polyester resins or

2.) 15 to 60% by weight, preferably 30 to 50% by weight, relative to the total weight of the wire enamel, of one or more polyester-imide resins or

3.) 18 to 40% by weight, preferably 25 to 35% by weight, relative to the total weight of the wire enamel, of one or more polyesters containing hydroxyl groups and one or more isocyanate components in which the free isocyanate groups are completely masked,

and in that they contain

a) 95 to 70% by weight, preferably 90 to 80% by weight, relative to the total weight of the solvent, of cyclic alkylene carbonates of the formula (I) and

b) 5 to 30% by weight, preferably 10 to 20% by weight, relative to the total weight of the solvent, of aromatic and/or aliphatic hydrocarbons having a boiling point of between 100 and 200 °C, as further solvents (C), excluding cresolic and phenolic solvents.

**2.** Wire enamels according to Claim 1, characterized in that ethylene carbonate, propylene carbonate and/or isobutylene carbonate are employed as the cyclic alkylene carbonates of the formula (I).

**3.** Wire enamels according to Claim 1 or 2, characterized in that aromatic hydrocarbons or mixtures of different hydrocarbons having a content of aromatic hydrocarbons of at least 90% by weight are employed as the further solvent (C).

**4.** Wire enamels according to one of Claims 1 to 3, characterized in that they contain, as the component A, a polyesterimide containing trishydroxyethyl isocyanurate.

**5.** Process for the continuous coating of wires, in which a wire enamel is first applied to the surface of the wire and subsequently baked, characterized in that a wire enamel according to one of Claims 1 to 4 is employed.

**Claims for the following Contracting State : ES**

**1.** Process for the production of wire enamels containing

A) polyester resins or polyester-imide resins or polyesters containing hydroxyl groups together with an isocyanate component in which the free isocyanate groups are completely masked and

B) alkylene carbonates of the formula (I)

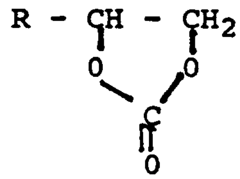

(I)

in which R represents either hydrogen or an aliphatic or cycloaliphatic or aromatic or alkyl-aromatic radical, characterized in that they contain, as the component A,

1.) 15 to 55% by weight, preferably 40 to 50% by weight, relative to the total weight of the wire enamel, of one or more polyester resins or

2.) 15 to 60% by weight, preferably 30 to 50% by weight, relative to the total weight of the wire enamel, of one or more polyester-imide resins or

3.) 18 to 40% by weight, preferably 25 to 35% by weight, relative to the total weight of the wire enamel, of one or more polyesters containing hydroxyl groups and one or more isocyanate components in which the free isocyanate groups are completely masked,

and in that they contain

a) 95 to 70% by weight, preferably 90 to 80% by weight, relative to the total weight of the solvent, of cyclic alkylene carbonates of the formula (I) and

b) 5 to 30% by weight, preferably 10 to 20% by weight, relative to the total weight of the solvent, of aromatic and/or aliphatic hydrocarbons having a boiling point of between 100 and 200 °C, as further solvents (C), excluding cresolic and phenolic solvents.

**2.** Process according to Claim 1, characterized in that ethylene carbonate, propylene carbonate and/or isobutylene carbonate are employed as the cyclic alkylene carbonates of the formula (I).

**3.** Process according to Claim 1 or 2, characterized in that aromatic hydrocarbons or mixtures of different hydrocarbons having a content of aromatic hydrocarbons of at least 90% by weight are employed as the further solvent (C).

**4.** Process according to one of Claims 1 to 3, characterized in that the wire enamels contain, as the component A, a polyesterimide containing trishydroxyethyl isocyanurate.

**5.** Process for the continuous coating of wires, in which a wire enamel is first applied to the surface of the wire and subsequently baked, characterized in that a wire enamel prepared by a process according to one of Claims 1 to 4 is employed.

**Revendications**

**Revendications pour les Etats contractants suivants : AT, BE, CH, DE, DK, FR, GB, IT, LI, NL, SE**

**1.** Laques pour fils de fer, contenant

A) des résines de polyester ou des résines de polyesterimide ou des polyesters contenant des groupements hydroxyles conjointement à un composant isocyanate, dont les groupements isocyanates libres sont entièrement bloqués et

B) des carbonates d'alkylène de formule (I)

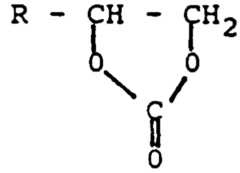

(I)

R représentant soit l'hydrogène, soit un résidu ou aliphatique ou cycloaliphatique ou aromatique ou alkylaromatique, caractérisées en ce qu'elles contiennent en tant que composant A

1.) de 15 à 55 % en poids, de préférence de 40 à 50 % en poids, par rapport au poids total de la laque pour fils de fer, d'une ou de plusieurs résines de polyester ou

2.) de 15 à 60 % en poids, de préférence de 30 à 50 % en poids, par rapport au poids total de la laque pour fils de fer, d'une ou de plusieurs résines de polyesterimide ou

3.) de 18 à 40 % en poids, de préférence de 25 à 35 % en poids, par rapport au poids total de la laque pour fils de fer, d'un ou de plusieurs polyesters contenant des groupements hydroxyles et d'un ou de plusieurs composants isocyanates, dont les groupements isocyanates libres sont entièrement bloqués,

et qu'elles contiennent

a) de 95 à 70 % en poids, de préférence de 90 à 80 % en poids, par rapport au poids total du solvant, de carbonates d'alkylène cycliques de formule (I) et

b) de 5 à 30 % en poids, de préférence de 10 à 20 % en poids, par rapport au poids total du solvant, d'hydrocarbures aromatiques et/ou aliphatiques ayant un point d'ébullition compris entre 100 et 200 °C en tant que solvant supplémentaire (C), les solvants crésoliques et phénoliques étant exceptés.

**2.** Laques pour fils de fer selon la revendication 1, caractérisées en ce que l'on utilise en tant que carbonates d'alkylène cycliques de formule (I) le carbonate d'éthylène, le carbonate de propylène et/ou le carbonate d'isobutylène.

**3.** Laques pour fils de fer selon la revendication 1 ou 2, caractérisées en ce que l'on utilise en tant que solvant supplémentaire (C) des hydrocarbures aromatiques ou des mélanges de divers hydrocarbures ayant une teneur en hydrocarbures aromatiques d'au moins 90 % en masse.

**4.** Laques pour fils de fer selon l'une quelconque des revendications 1 à 3, caractérisées en ce qu'elles contiennent en tant que composant A un polyesterimide contenant de l'isocyanurate de trishydroxyéthyle.

**5.** Procédé de revêtement en continu de fils de fer, lors duquel on applique tout d'abord une laque pour fils de fer sur la surface du fil et lors duquel on procède ensuite à une cuisson, caractérisé en ce que l'on utilise une laque pour fils de fer selon l'une quelconque des revendications 1 à 4.

**Revendications pour l'Etat contractant suivant : ES**

**1.** Procédé de préparation de laques pour fils de fer, contenant

A) des résines de polyester ou des résines de polyesterimide ou des polyesters contenant des groupements hydroxyles conjointement à un composant isocyanate, dont les groupements isocyanates libres sont entièrement bloqués et

B) des carbonates d'alkylène de formule (I)

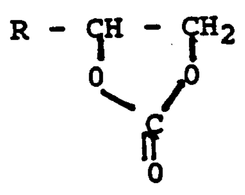

(I)

R représentant soit l'hydrogène, soit un résidu ou aliphatique ou cycloaliphatique ou aromatique ou alkylaromatique, caractérisées en ce qu'elles contiennent en tant que composant A

1.) de 15 à 55 % en poids, de préférence de 40 à 50 % en poids, par rapport au poids total de la laque pour fils de fer, d'une ou de plusieurs résines de polyester ou

2.) de 15 à 60 % en poids, de préférence de 30 à 50 % en poids, par rapport au poids total de la laque pour fils de fer, d'une ou de plusieurs résines de polyesterimide ou

3.) de 18 à 40 % en poids, de préférence de 25 à 35 % en poids, par rapport au poids total de la laque pour fils de fer, d'un ou de plusieurs polyesters contenant des groupements hydroxyles et

d'un ou de plusieurs composants isocyanates, dont les groupements isocyanates libres sont entièrement bloqués,

et qu'elles contiennent

a) de 95 à 70 % en poids, de préférence de 90 à 80 % en poids, par rapport au poids total du solvant, de carbonates d'alkylène cycliques de formule (I) et

b) de 5 à 30 % en poids, de préférence de 10 à 20 % en poids, par rapport au poids total du solvant, d'hydrocarbures aromatiques et/ou aliphatiques ayant un point d'ébullition compris entre 100 et 200°C en tant que solvant supplémentaire (C), les solvants crésoliques et phénoliques étant exceptés.

**2.** Procédé selon la revendication 1, caractérisé en ce que l'on utilise en tant que carbonates d'alkylène cycliques de formule (I) le carbonate d'éthylène, le carbonate de propylène et/ou le carbonate d'isobutylène.

**3.** Procédé selon la revendication 1 ou 2, caractérisé en ce que l'on utilise en tant que solvant supplémentaire (C) des hydrocarbures aromatiques ou des mélanges de divers hydrocarbures ayant une teneur en hydrocarbures aromatiques d'au moins 90 % en masse.

**4.** Procédé selon l'une quelconque des revendications 1 à 3, caractérisé en ce que les laques pour fils de fer contiennent en tant que composant A un polyesterimide contenant de l'isocyanurate de trishydroxyéthyle.

**5.** Procédé de revêtement en continu de fils, lors duquel on applique tout d'abord une laque pour fils de fer sur la surface du fil et lors duquel on procède ensuite à une cuisson, caractérisé en ce que l'on utilise une laque pour fils de fer selon l'une quelconque des revendications 1 à 4.